# FASCICULE DE BREVET EUROPEEN

(11) **EP 0 720 177 B1**
(45) Date de publication et mention de la délivrance du brevet: **15.04.1998**
(21) Numéro de dépôt: 95402944.3
(22) Date de dépôt: 26.12.1995
(51) Int. Cl.: G21C 3/07, C22F 1/18, G21C 21/02

(54) **Procédé de fabrication d'un tube pour assemblage combustible nucléaire et tubes ainsi obtenus**
Verfahren zur Fertigung eines Rohrs für Kernbrennstabbündel und danach erhaltene Rohre
Method for producing a tube for a nuclear fuel assembly and the tubes produced thereby

(30) Priorité: 29.12.1994 FR 9415874
(43) Date de publication de la demande: 03.07.1996
(73) Titulaire: FRAMATOME, 92400 Courbevoie (FR); COMPAGNIE GENERALE DES MATIERES NUCLEAIRES, F-78140 Velizy Villacoublay (FR); ZIRCOTUBE, F-92400 Courbevoie (FR)
(72) Inventeur: Mardon, Jean-Paul, F-69300 Caluire (FR); Sevenat, Jean, F-44250 Saint-Brevin-les-Pins (FR); Charquet, Daniel, c/o Cezus, F-73400 Ugine Cedex (FR)
(74) Mandataire: Fort, Jacques

(56) Documents cités:
- EP-A- 0 148 688
- EP-A- 0 192 405
- EP-A- 0 246 986
- FR-A- 2 382 508
- FR-A- 2 575 764
- FR-A- 2 624 136
- US-A- 5 366 690

## Description

La présente invention concerne les tubes en alliage à base de zirconium destinés à constituer la totalité ou la partie externe de la gaine d'un crayon de combustible nucléaire ou un tube guide. Elle trouve une application particulièrement importante, bien que non exclusive, dans le domaine de la fabrication de tubes de gainage pour les crayons de combustible destinés aux réacteurs à eau sous pression.

On a jusqu'ici surtout utilisé des gaines en un alliage à base de zirconium, dit "Zircaloy 4", qui contient notamment, en poids :
- 1,20 à 1,70% d'étain,
- 0,18 à 0,24% de fer,
- 0,07 à 0,13% de chrome,
le total des teneurs en fer et chrome étant compris entre 0,28 et 0,37%. Classiquement, le rapport entre les teneurs en fer et en chrome est compris entre 1,38 et 3,42 environ.

La teneur en oxygène des "Zircaloy 4" habituelle ne dépasse pas 0,16% et est en général très inférieure.

La tenue mécanique des gaines en "Zircaloy 4" s'est révélée satisfaisante, mais, en revanche, leur corrosion par l'eau sous pression à haute température a limité la durée de maintien admissible en réacteur.

On a également déjà proposé des gaines en un alliage Zr-Nb à 2,5% environ de niobium (US-A-4 717 534) qui s'est révélé avoir une bonne résistance à la corrosion en milieu aqueux à haute température. Mais en contrepartie, un tel alliage a une tenue au fluage thermique médiocre. Elle a pu être améliorée en dopant l'alliage par une teneur en oxygène comprise entre 0,10 et 0,16% en poids et en soumettant la gaine à un traitement thermique final de recristallisation. Toutefois, la tenue au fluage thermique d'un tel alliage reste inférieure à celle d'autres matériaux de gainage.

La présente invention vise notamment à fournir un procédé de fabrication de tubes de gainage permettant d'arriver à un tube présentant simultanément une bonne résistance à la corrosion en milieu aqueux à haute température et une tenue au fluage à haute température satisfaisante, sans pour autant présenter de difficulté de mise en oeuvre conduisant à un taux de rebut élevé.

Dans ce but, l'invention propose notamment un procédé de fabrication de tubes en alliage à base de zirconium contenant également 50 à 250 ppm de fer, 0,8 à 1,3% en poids de niobium, moins de 1600 ppm d'oxygène, moins de 200 ppm de carbone et moins de 120 ppm de silicium, ledit procédé comprenant :
- la transformation à chaud du lingot (par exemple par forgeage ou laminage), pour obtenir une barre ;
- la trempe à l'eau de la barre, après chauffage dans un four électrique ou par induction entre 1000°C et 1200°C ;
- le filage en ébauche d'une billette creuse, après chauffage à une température comprise entre 600°C et 800°C ;
- un traitement thermique éventuel de l'ébauche, entre 560°C et 620°C ;
- au moins quatre laminages à froid sous forme de tubes d'épaisseur décroissante, avec des traitements thermiques intermédiaires et un traitement thermique final à une température comprise entre 560°C et 620°C, l'ensemble des traitements thermiques étant effectué en atmosphère inerte ou sous vide.

Le tube ainsi réalisé ne subit plus de traitement thermique modifiant sa structure métallurgique jusqu'au moment où il est utilisé comme tube de gainage ou tube guide. En revanche, il reçoit encore untraitement de surface et il est soumis à examen. Le traitement de surface peut notamment comporter un sablage et un décapage chimique, suivi d'un rinçage. Le traitement de surface peut être complété par un polissage à l'aide d'une bande en circulation ou à l'aide d'une roue. Le contrôle est effectué de façon classique.

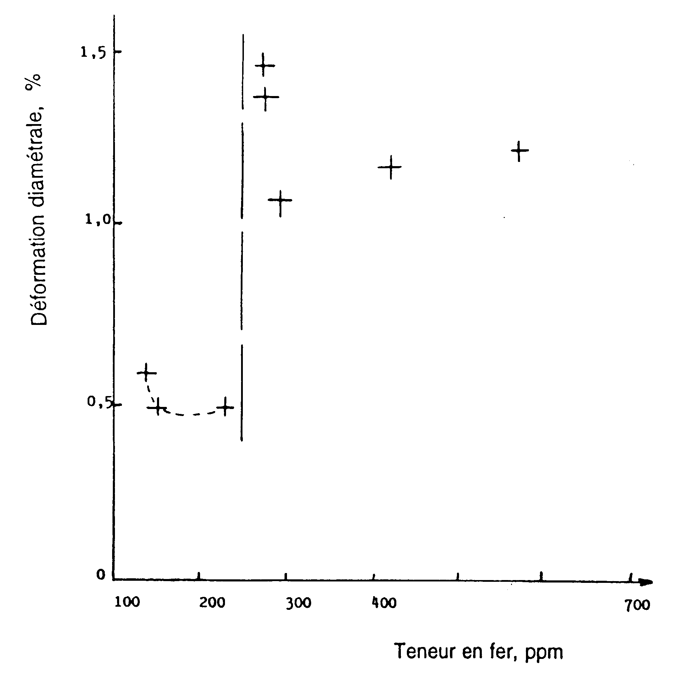

Il est important de ne pas dépasser une teneur en fer de 250 ppm. Il a en effet été constaté que, de façon inattendue, la résistance au fluage à haute température diminue brutalement lorsque la teneur en fer dépasse 250 ppm. En pratique, une teneur en fer comprise entre 100 et 200 ppm donne de bons résultats en ce qui concerne la résistance au fluage. La figure unique montre des résultats d'essais, montrant les déformations diamétrales obtenues pour différentes teneurs en fer dans des conditions représentatives de celles subies par une gaine, pour un alliage à 1% de niobium.

Il est également essentiel de ne faire subir à l'alliage aucun traitement thermique à une température supérieure à 620°C au-delà du filage. Un traitement thermique dépassant cette température réduit en effet notablement la résistance à la corrosion à chaud, comme le révèlent les résultats ci-après, obtenus par des tests de corrosion en autoclave dans la vapeur d'eau à 500°C qui, pour des alliages de zirconium contenant 1% de niobium, constituent un test de corrosion uniforme.

### Exemple 1 :

- traitements intermédiaires : 2 heures à 580°C,
- traitement final : 2 heures à 580°C.

### Exemple 2 :

- traitements intermédiaires : 2 heures à 700°C,
- traitement final : 2 heures à 580°C.

### Exemple 3 :

- traitements intermédiaires : 2 heures à 700°C,
- traitement final : 2 heures à 700°C.

Les gains de masse obtenus lors des tests en autoclave ont été :
- exemple 1 : 48 mg/dm²
- exemple 2 : 57 mg/dm²
- exemple 3 : 63 mg/dm²

Les échantillons des trois exemples avaient une teneur de 150 ppm de fer.

Il est apparu que l'alliage présente un phénomène de mémoire tel que l'effet d'un seul traitement au-delà de 620°C appliqué à l'alliage au-delà de la première passe ne s'efface jamais complètement.

En général, les traitements thermiques intermédiaires seront effectués à une température de consigne comprise entre 565 et 605°C et une température supérieure à 580°C pour les traitements intermédiaires et d'environ 580°C pour le traitement final s'est révélée particulièrement satisfaisante pour la majeure partie des compositions.

La fabrication du tube à partir d'une ébauche filée peut notamment s'effectuer en quatre ou cinq passes séparées par des traitements thermiques à une température comprise entre 560°C et 620°C, avantageusement proche de 620°C.

Une teneur en oxygène de l'ordre de 1200 ppm s'est révélée suffisante pour avoir un effet favorable sur la résistance au fluage dans un alliage recristallisé.

L'invention propose également un tube de gainage ou de guidage pour un assemblage combustible destiné à un réacteur nucléaire refroidi et modéré par de l'eau sous pression, constitué d'un alliage à base de zirconium à l'état complètement recristallisé, ayant 50 à 250 ppm de fer, 0,8 à 1,3% en poids de niobium, 1000 à 1600 ppm d'oxygène, moins de 200 ppm de carbone, moins de 120 ppm de silicium, le reste étant constitué par du zirconium, exception faite des impuretés inévitables.

L'examen de l'alliage ainsi élaboré a révélé l'absence d'alignements de précipités de β Zr, néfastes du point de vue de la corrosion.

Des essais comparatifs ont été effectués sur des alliages ayant des teneurs en niobium comprises entre 0,86 et 1,3% et une teneur en fer comprise entre 100 et 150 ppm.

Une gamme de fabrication représentative, à partir d'une barre forgée de diamètre 177 mm, est la suivante :
- trempe à l'eau, après chauffage de 1 heure à 1050°C ;
- usinage d'une billette de 168 mm de diamètre extérieur et 48 mm de diamètre intérieur ;
- filage, après chauffage par induction à 650°C pour obtenir un diamètre extérieur de 80 mm et un diamètre intérieur de 48 mm ;
- laminage des tubes en cinq cycles, comprenant des traitements thermiques intermédiaires de deux heures à 580°C ;
- traitement thermique final de deux heures à 580°C.

Les essais ont révélé une résistance à la corrosion généralisée, dans un milieu aqueux à haute température représentatif des conditions en réacteur à eau sous pression, comparable à celle des alliages connus Zr-Nb à teneur élevée en niobium ; ils ont également révélé une résistance au fluage thermique très supérieure à celles des alliages connus et très comparable à celle des meilleurs "Zircaloy 4" : c'est ainsi que, après 240 heures à 400°C sous 130 MPa, on peut mesurer les déformations diamétrales de fluage ci-après :
- Zr, 1%, Nb, 150 ppm Fe, recristallisé : 0,5%,
- "Zircaloy 4" recristallisé de composition optimale du point de vue fluage : ≤1,0%.

## Revendications

1. Procédé de fabrication de tube destiné à constituer la totalité ou la partie externe d'une gaine de crayon de combustible nucléaire ou un tube guide pour assemblage de combustible nucléaire,
caractérisé en ce que :
on constitue une barre en un alliage à base de zirconium contenant également de 50 à 250 ppm de fer, 0,8 à 1,3% en poids de niobium, moins de 1600 ppm d'oxygène, moins de 200 ppm de carbone et moins de 120 ppm de silicium ; on trempe à l'eau la barre après chauffage entre 1000°C et 1200°C ;
on file une ébauche après chauffage de 600°C à 800°C ;
on lamine à froid, en au moins quatre passes, ladite ébauche pour obtenir un tube, avec des traitements thermiques intermédiaires entre 560°C et 620°C ; et
on effectue un traitement thermique final entre 560°C et 620°C, l'ensemble des traitements thermiques étant effectué en atmosphère inerte ou sous vide.

2. Procédé selon la revendication 1, caractérisé en ce que le tube est obtenu par quatre ou cinq passes de laminage à froid à partir de l'ébauche filée.

3. Procédé selon la revendication 1 ou 2, caractérisé en ce que le filage de l'ébauche est suivi d'un traitement thermique effectué entre 560°C et 620°C.

4. Procédé selon la revendication 1, 2 ou 3, caractérisé en ce que les traitements thermiques intermédiaires sont effectués à une température de consigne comprise entre 565°C et 605°C.

5. Procédé selon l'une quelconque des revendications 1 à 4, caractérisé en ce que le traitement thermique final est avantageusement vers 580°C.

6. Procédé selon l'une quelconque des revendications 1 à 5, caractérisé en ce que la teneur en fer est d'environ 150 ppm.

7. Procédé selon l'une quelconque des revendications 1 à 6, caractérisé en ce que la teneur en oxygène est comprise entre 1000 et 1600 ppm.

8. Tube de gainage pour crayon de combustible ou de guidage pour assemblage combustible de réacteur nucléaire refroidi et modéré par de l'eau sous pression, constitué d'un alliage à base de zirconium à l'état complètement recristallisé, ayant 50 à 250 ppm de fer, 0,8 à 1,3% en poids de niobium, 1000 à 1600 ppm d'oxygène, moins de 200 ppm de carbone, moins de 120 ppm de silicium, le reste étant constitué par du zirconium, exception faite des impuretés inévitables.

## Patentansprüche

1. Verfahren zur Herstellung von Rohren, die darauf abzielen, die gesamte oder den äußeren Teil einer Hülse von Kernbrennstäben zu bilden oder ein Führungsrohr für Kernbrennstabbündel,
dadurch **gekennzeichnet,** daß:
ein Stab mit einer Legierung auf der Basis von Zirconium gebildet wird, der ebenso 50 bis 250 ppm Eisen, 0,8 bis 1,3 Gew.-% Niob, weniger als 1600 ppm Sauerstoff, weniger als 200 ppm Kohlenstoff und weniger als 120 ppm Silicium beinhaltet;
nach Erhitzung zwischen 1000 °C und 1200 °C der Stab wassergehärtet wird;
ein Rohling nach Erhitzung auf 600 °C bis 800 °C stranggepreßt wird;
der Rohling kalt in mindestens vier Schritten gewalzt wird, um ein Rohr mit zwischenzeitlichen Wärmebehandlungen zwischen 560 °C und 620 °C zu erhalten; und
eine endgültige Wärmebehandlung zwischen 560 °C und 620 °C ausgeführt wird, wobei die gesamten Wärmebehandlungen bei Atmosphärendruck oder im Vakuum ausgeführt werden.

2. Verfahren nach Anspruch 1,
dadurch gekennzeichnet, daß
das Rohr ausgehend von einem stranggepreßten Rohling in vier oder fünf Schritten von kaltem Walzen erhalten wird.

3. Verfahren nach Anspruch 1 oder 2,
dadurch gekennzeichnet, daß
dem Strangpressen des Rohlings eine thermische Behandlung folgt, die zwischen 560 °C und 620 °C ausgeführt wird.

4. Verfahren nach Anspruch 1, 2 oder 3,
dadurch gekennzeichnet, daß
die zwischenzeitlichen Wärmebehandlungen bei einer angewiesenen Temperatur zwischen 565 °C und 605 °C ausgeführt werden.

5. Verfahren nach einem der vorherigen Ansprüche 1 bis 4,
dadurch gekennzeichnet, daß
die endgültige Wärmebehandlung vorteilhafterweise bei 580 °C ausgeführt wird.

6. Verfahren nach einem der vorherigen Ansprüche 1 bis 5,
dadurch gekennzeichnet, daß
der Eisengehalt ungefähr 150 ppm beträgt.

7. Verfahren nach einem der vorherigen Ansprüche 1 bis 6,
dadurch gekennzeichnet, daß
der Sauerstoffgehalt zwischen 1000 und 1600 ppm liegt.

8. Hülsenrohr für Brennstäbe oder Führungsrohre für Kernbrennstabbündel von Kernreaktoren, die durch Druckwasser gekühlt und moderiert werden, das aus einer Legierung auf der Basis von Zirconium in vollkommen rekristallisiertem Zustand, mit einem Eisengehalt von 50 bis 250 ppm, 0,8 bis 1,3 Gew.-% Niob, 1000 bis 1600 ppm Sauerstoff, weniger als 200 ppm Kohlenstoff, weniger als 120 ppm Silicium besteht, wobei der Rest bis auf die Ausnahme von unvermeidbaren Unreinheiten aus Zirconium besteht.

## Claims

1. Method of manufacturing a tube for use in constituting the whole or the outer part of the sheath of a nuclear fuel rod or a guide tube for a nuclear fuel assembly,
characterized by the steps of:
forming a bar of a zirconium base alloy also containing 50 ppm to 250 ppm iron, 0.8% to 1.3% by weight niobium, less than 1600 ppm oxygen, less than 200 ppm carbon, and less than 120 ppm silicon;
water quenching the bar after it has been heated to between 1000°C and 1200°C;
extruding a blank after heating to between 600C° to 800°C;
cold rolling said blank in at least four passes to obtain a tube, with intermediate heat treatments in the range 560°C to 620°C; and
performing a final heat treatment in the range 560°C to 620°C,
all of the heat treatments being performed under an inert atmosphere or under a vacuum.

2. Method according to claim 1, characterized in that the tube is obtained by four or five cold rolling passes starting from the extruded blank.

3. Method according to claim 1 or 2, characterized in that extruding of the blank is followed with a heat treatment carried out in the range 560°C to 620°C.

4. Method according to claim 1, 2 or 3, characterized in that the intermediate heat treatments are performed at a set temperature in the range 565°C to 605°C.

5. Method according to any one of claims 1-4, characterized in that the final heat treatment is preferably at about 580°C.

6. Method according to any one of claims 1-5, characterized in that the iron content is about 150 ppm.

7. Method according to any one of claims 1-6, characterized in that the oxygen content is comprised between 1000 ppm and 1600 ppm.

8. Sheathing tube for fuel rod or guide tube for a fuel assembly of a nuclear reactor which is cooled and moderated by pressurized water, constituted by a zirconium base alloy in fully recrystallized condition, having 50 ppm to 250 ppm iron, 0.8% to 1.3% by weight niobium, 1000 ppm to 1600 ppm oxygen, less than 200 ppm carbon, less than 120 ppm silicon, the balance being zirconium and unavoidable impurities.
